# EUROPÄISCHE PATENTANMELDUNG

(11) **EP 4 424 797 A1**
(43) Veröffentlichungstag der Anmeldung: **04.09.2024**
(21) Anmeldenummer: 23159669.3
(22) Anmeldetag: 02.03.2023
(51) Int. Cl.: C10G 1/00, C10G 29/28

(54) **VERFAHREN ZUR REINIGUNG EINES SYNTHETISCHEN ROHÖLSTROMS**

(71) Anmelder: OMV Downstream GmbH, 1020 Wien (AT)
(72) Erfinder: MASTALIR, Matthias, 1020 Wien (AT)
(74) Vertreter: SONN Patentanwälte GmbH & Co KG

(57) **Zusammenfassung**

Die vorliegende Erfindung betrifft ein Verfahren zur Reinigung eines synthetischen Rohölstroms (1), das Verfahren umfassend die folgenden Schritte:
- Bereitstellen des synthetischen Rohölstroms (1), wobei der synthetische Rohölstrom (1) Dienverbindungen enthält und eine Dien-Zahl von mindestens 0,1 g/100g aufweist;
- Inkontaktbringen des synthetischen Rohölstroms (1) mit einem Polysulfid-Strom (2) enthaltend mindestens eine Polysulfidverbindung, um ein Gemisch zu bilden, wodurch zumindest ein Teil der Dienverbindungen in Dien-freie Produkte umgesetzt wird; und
- Abscheiden der Dien-freien Produkte aus dem Gemisch, um einen gereinigten synthetischen Rohölstrom (3) zu erhalten.

## Beschreibung

Die vorliegende Erfindung betrifft Verfahren zur Reinigung eines synthetischen Rohölstroms.

Synthetisches Rohöl, teilweise auch als Syncrude bezeichnet, kann aus unterschiedlichen Prozessen gewonnen werden. Beispielsweise kann es sich bei synthetischem Rohöl um Schieferöl handeln, welches durch Pyrolyse aus Ölschiefer gewonnen wird. Eine weitere Quelle sind aus Ölsand gewonnene Kohlenwasserstoffe, insbesondere Bitumen, aus welchen durch Upgrading synthetisches Rohöl erhalten werden kann. Darüber hinaus kann synthetisches Rohöl auch aus Kunststoffmaterial, beispielsweise Kunststoffabfall, durch Cracken hergestellt werden.

Synthetische Rohöle enthalten typischerweise unterschiedliche Verunreinigungen, welche nachteilige Auswirkungen auf Raffinierungsprozesse und Raffinerieanlagen haben können bzw. das Rohöl auch gänzlich ungeeignet für gewisse Raffinierungsprozesse machen können. Art und Gehalt der Verunreinigungen können dabei je nach Quelle und Verfahren zur Gewinnung des synthetischen Rohöls stark variieren.

Ein besonders großes Problem bei der Weiterverarbeitung von synthetischen Rohölen stellt die sogenannte Gum-Bildung dar. Pyrolyseöle enthalten in der Regel unterschiedliche chemische Verbindungen, die dazu neigen können, Ablagerungen zu bilden. Solche Ablagerungen können in der Folge Raffinerieanlagen verstopfen oder anderweitig schädigen, den Reinigungsaufwand erhöhen und die Lebensdauer von Anlagen verkürzen.

Das Problem der Gum-Bildung im Zusammenhang mit synthetischen Rohölen ist noch nicht zufriedenstellend gelöst. Es besteht weiterhin ein Bedarf an Methoden, die Tendenz zur Gum-Bildung von synthetischen Rohölen zu vermindern. Es ist daher eine Aufgabe der vorliegenden Erfindung, Verfahren zur Verfügung zu stellen, um die Gum-Bildung von synthetischen Rohölen zu vermindern.

Die vorliegende Erfindung betrifft daher ein Verfahren zur Reinigung eines synthetischen Rohölstroms, das Verfahren umfassend die folgenden Schritte:
- Bereitstellen des synthetischen Rohölstroms, wobei der synthetische Rohölstrom Dienverbindungen enthält und eine Dien-Zahl von mindestens 0,1 g/100g aufweist;
- Inkontaktbringen des synthetischen Rohölstroms mit einem Polysulfid-Strom enthaltend mindestens eine Polysulfidverbindung, um ein Gemisch zu bilden, wodurch zumindest ein Teil der Dienverbindungen in Dien-freie Produkte umgesetzt wird; und
- Abscheiden der Dien-freien Produkte aus dem Gemisch, um einen gereinigten synthetischen Rohölstrom zu erhalten.

Im Zusammenhang mit der vorliegenden Erfindung hat sich herausgestellt, dass synthetischen Rohöle insbesondere dann vermehrt zur Gum-Bildung neigen, wenn sie einen hohen Gehalt an Dienverbindungen aufweisen. Reaktive Diene können also als Gum-Bildner wirken und zu schädlichen Ablagerungen in Raffinerieanlagen führen. Beispielsweise können Diene teilweise Diels-Alder-Reaktionen eingehen und dadurch zu Vernetzungen zwischen Molekülen und schlussendlich zu Ablagerungen führen. Außerdem können Diene mit Katalysatoren in Hydrieranlagen stabile Komplexe bilden. Es hat sich im Rahmen der Erfindung daher als günstig herausgestellt, den Dien-Gehalt von synthetischen Rohölen zu reduzieren.

Im erfindungsgemäßen Verfahren wird dies dadurch erreicht, dass der synthetische Rohölstrom mit Polysulfidverbindungen umgesetzt wird. Es hat sich gezeigt, dass Polysufildverbindungen hervorragend dazu geeignet sind, reaktive Diene in unlösliche Produkte bzw. Feststoffe zu überführen, welche einfach vom synthetischen Rohölstrom abgetrennt werden können. Diene können mit Polysulfidverbindungen in einer Additionsreaktion reagieren, um ein Thiol zu bilden, welches anschließend mit weiteren Molekülen, beispielsweise Alkenen, reagieren kann. Dadurch kommt es zu einer Vernetzung mehrerer Moleküle und damit zu einer gezielten Ausfällung. Die Gum-Bildung wird im erfindungsgemäßen Verfahren also gewissermaßen gezielt herbeigeführt und der "Gum" - d.h. die unlöslichen Reaktionsprodukte aus den Dienverbindungen und den Polysulfidverbindungen - wird abgetrennt. Der gereinigte synthetische Rohölstrom weist daher einen geringeren Dien-Gehalt auf und neigt daher in der Folge weniger zur Gum-Bildung.

Die Verwendung von schwefelhaltigen Verbindungen zur Entfernung von Olefinen aus Kohlenwasserstoffprodukten ist in allgemeiner Form aus dem Stand der Technik bekannt. So beschreibt die WO 2021/021449 A1 Verfahren zur Entfernung von Olefinen aus leichten Kohlenwasserstoffströmen durch Mercaptanisierung mit Schwefelwasserstoff in Anwesenheit eines Katalysators. Dabei sollen Olefine in Mercaptane überführt werden, die anschließend in einem sogenannten MEROX Prozessschritt oxidiert und schließlich abgetrennt werden sollen. Die WO 2021/021449 A1 bezieht sich jedoch weder auf die Behandlung von synthetischen Rohölen, noch auf die im Zusammenhang mit der Gum-Bildung besonders problematischen Dienverbindungen.

Die vorliegende Erfindung beruht zudem auf einem vollkommen anderen Ansatz. Sie zielt konkret auf die Entfernung von Dienen in synthetischen Rohölen ab und setzt dabei Polysulfid-Verbindungen ein, um die Dienverbindungen gezielt als Dien-freie Produkte auszufällen und so zu entfernen.

Die Behandlung mit Polysulfidverbindungen hat zudem weitere positive Effekte auf die Qualität des synthetischen Rohölstroms. So können unter anderem Neutralverbindungen wie Ester, Aldehyde, Ketone, Organohalogenverbindungen, Amide und Nitrile umgesetzt und in der Folge entfernt werden. Solche Verbindungen können beispielsweise basisch hydrolysiert werden, wobei polare bzw. geladene Verbindungen entstehen, die in einer Wäsche mit einer wässrigen Phase entfernt werden können.

Bei den im synthetischen Rohölstrom enthaltenen Dienverbindungen handelt es sich vorzugsweise um Verbindungen enthaltend konjugierte oder kumulierte Kohlenstoff-Kohlenstoff-Doppelbindungen, insbesondere konjugierte Kohlenstoff-Kohlenstoff-Doppelbindungen. Solche Verbindungen neigen insbesondere zur Gum-Bildung, beispielsweise durch Diels-Alder Reaktionen, und können mit dem erfindungsgemäßen Verfahren besonders gut entfernt werden.

Die Fachperson ist mit Methoden zur Bestimmung der Dien-Zahl vertraut. Vorzugsweise wird die Dien-Zahl gemäß dem Standard ASTM UOP326-07 bestimmt.

Der synthetische Rohölstrom weist eine Dien-Zahl von mindestens 0,1 g/100g auf, bevorzugt mindestens 0,2 g/100g, mehr bevorzugt mindestens 0,3 g/100g, mehr bevorzugt mindestens 0,4 g/100g, mehr bevorzugt mindestens 0,5 g/100g, mehr bevorzugt mindestens 0,6 g/100g, mehr bevorzugt mindestens 0,7 g/100g, mehr bevorzugt mindestens 0,8 g/100g, mehr bevorzugt mindestens 0,9 g/100g, mehr bevorzugt mindestens 1,0 g/100g, mehr bevorzugt mindestens 1,1 g/100g, mehr bevorzugt mindestens 1,2 g/100g, mehr bevorzugt mindestens 1,3 g/100g, mehr bevorzugt mindestens 1,4 g/100g, mehr bevorzugt mindestens 1,5 g/100g, mehr bevorzugt mindestens 1,6 g/100g, mehr bevorzugt mindestens 1,7 g/100g, mehr bevorzugt mindestens 1,8 g/100g, mehr bevorzugt mindestens 1,9 g/100g, mehr bevorzugt mindestens 2,0 g/100g. Vorzugsweise weist der synthetische Rohölstrom eine Dien-Zahl im Bereich von 0,1 g/100g bis 15 g/100g auf, mehr bevorzugt von 1,0 g/100g bis 12 g/100g, insbesondere von 1,5 g/100g bis 10 g/100g.

Der gereinigte synthetische Rohölstrom weist vorzugsweise eine geringere Dien-Zahl auf als der synthetische Rohölstrom. Vorzugsweise weist der gereinigte synthetische Rohölstrom eine Dien-Zahl von weniger als 5 g/100g auf, mehr bevorzugt weniger als 4 g/100g, mehr bevorzugt weniger als 3 g/100g, mehr bevorzugt weniger als 2 g/100g, mehr bevorzugt weniger als 1,5 g/100g, mehr bevorzugt weniger als 1 g/100g, mehr bevorzugt weniger als 0,9 g/100g, mehr bevorzugt weniger als 0,8 g/100g, mehr bevorzugt weniger als 0,7 g/100g, mehr bevorzugt weniger als 0,6 g/100g, mehr bevorzugt weniger als 0,5 g/100g. Vorzugsweise weist der gereinigte synthetische Rohölstrom eine Dien-Zahl im Bereich von 0,01 g/100g bis 5g/100g auf, mehr bevorzugt von 0,1 g/100g bis 2 g/100g, insbesondere von 0,2 g/100g bis 1 g/100g.

Es hat sich als vorteilhaft erwiesen, wenn das Inkontaktbringen des synthetischen Rohölstroms mit dem Polysulfid-Strom bei einer Temperatur von mindestens 80 °C, vorzugsweise mindestens 100 °C, mehr bevorzugt mindestens 120 °C, mehr bevorzugt mindestens 140 °C, mehr bevorzugt mindestens 160 °C, mehr bevorzugt mindestens 180 °C erfolgt. Insbesondere ist es bevorzugt, wenn das Inkontaktbringen des synthetischen Rohölstroms mit dem Polysulfid-Strom bei einer Temperatur im Bereich von 80 bis 450 °C, vorzugsweise von 100 bis 400 °C, mehr bevorzugt von 120 bis 350 °C, mehr bevorzugt von 140 bis 300 °C, mehr bevorzugt von 160 bis 260 °C, mehr bevorzugt von 180 bis 220 °C erfolgt. Eine höhere Temperatur kann die Reaktion zwischen den Dienverbindungen und den Polysulfidverbindungen begünstigen und daher zu einer noch stärkeren Reduktion des Dien-Gehalts führen.

In einer bevorzugten Ausführungsform erfolgt das Inkontaktbringen des synthetischen Rohölstroms mit dem Polysulfidstrom für eine Dauer von mindestens 0,5 Minuten, bevorzugt mindestens 1 Minute, mehr bevorzugt mindestens 2 Minuten, noch mehr bevorzugt mindestens 5 Minuten, am meisten bevorzugt mindestens 12 Minuten. Das Vorsehen einer längeren Dauer ermöglicht einen vollständigeren Ablauf der Reaktionen zwischen den Dienverbindungen und den Polysulfidverbindungen, sodass der Dien-Gehalt noch stärker reduziert werden kann. Insbesondere ist es daher bevorzugt, wenn die Dauer zwischen 0,5 und 180 Minuten, bevorzugt zwischen 1 und 120 Minuten, mehr bevorzugt zwischen 2 und 60 Minuten, noch mehr bevorzugt zwischen 5 und 30 Minuten, am meisten bevorzugt zwischen 12 und 20 Minuten beträgt. Die Dauer ist dabei vorzugsweise die durchschnittliche Zeitspanne zwischen dem erstmaligen Inkontaktbringen des synthetischen Rohölstroms mit dem Polysulfid-Strom und dem Abscheiden der Dien-freien Produkte aus dem Gemisch, um den gereinigten synthetischen Rohölstrom zu erhalten. Wenn das Verfahren als kontinuierlicher Prozess durchgeführt wird, entspricht die Dauer vorzugsweise der durchschnittlichen Verweilzeit in einer eingesetzten Waschvorrichtung, z.B. in einem Mixer-Settler.

In einer bevorzugten Ausführungsform erfolgt das Inkontaktbringen des synthetischen Rohölstroms mit dem Polysulfid-Strom in einem Druckbehälter. Das Vorsehen eines Druckbehälters ermöglicht die Behandlung bei höheren Drücken und Temperaturen und kann die Entfernung von Dienverbindungen begünstigen.

Vorzugsweise erfolgt das Waschen des synthetischen Rohölstroms mit der ersten wässrigen Waschlösung bei einem Druck von mehr als 2 bar, bevorzugt mehr als 3 bar, mehr bevorzugt mehr als 5 bar, noch mehr bevorzugt mehr als 7 bar, am meisten bevorzugt mehr als 10 bar. Das Vorsehen eines so hohen Druckes ermöglicht, wie erwähnt, eine hohe Temperatur. Besonders bevorzugt ist es, wenn das Waschen des synthetischen Rohölstroms mit der ersten wässrigen Waschlösung bei einem Druck im Bereich von 2 bar bis 50 bar, bevorzugt von 3 bar bis 35 bar, mehr bevorzugt von 5 bar bis 25 bar, noch mehr bevorzugt von 7 bar bis 20 bar, am meisten bevorzugt von 10 bar bis 18 bar, erfolgt.

Der Polysulfid-Strom kann ein wasserfreier Strom sein, beispielsweise kann er erhältlich sein aus in einem Amin gelösten Schwefel. Bevorzugt ist es jedoch, wenn der Polysulfid-Strom eine wässrige Lösung ist. Dies hat unter anderem den Vorteil, dass weitere Verunreinigungen, beispielsweise gewisse Salze und polare Verbindungen besonders effizient mitentfernt werden können. Außerdem begünstigt die Verwendung einer wässrigen Lösung die Entfernung von Neutralverbindungen wie Ester, Aldehyde, Ketone, Organohalogenverbindungen, Amide und Nitrile durch basische Hydrolyse. Die Verunreinigungen können anschließend einfach mit der wässrigen Phase entfernt werden.

Vorzugsweise beträgt die Konzentration der Polysulfidverbindungen im Polysulfid-Strom mindestens 1 Gew.-%, mehr bevorzugt mindestens 5 Gew.-%, mehr bevorzugt mindestens 10 Gew.-%, mehr bevorzugt mindestens 15 Gew.-%, mehr bevorzugt mindestens 20 Gew.-%, mehr bevorzugt mindestens 25 Gew.-%. Vorzugsweise beträgt die Konzentration zwischen 1 Gew.-% und 80 Gew.-%, mehr bevorzugt zwischen 5 Gew.-% und 60 Gew.-%, mehr bevorzugt zwischen 10 Gew.-% und 50 Gew.-%, mehr bevorzugt zwischen 15 Gew.-% und 40 Gew.-%. Der Einsatz so hoher Polysulfidkonzentrationen begünstigt die Reaktion mit den im synthetischen Rohölstrom enthaltenen Dienverbindungen und kann so zu einer noch stärkeren Reduktion des Dien-Gehalts führen.

In einer bevorzugten Ausführungsform weist der Polysulfid-Strom einen pH-Wert von mehr als 8, bevorzugt mehr als 9, mehr bevorzugt mehr als 10, mehr bevorzugt mehr als 11, mehr bevorzugt mehr als 12, mehr bevorzugt mehr als 13, auf. Vorzugsweise liegt der pH-Wert im Bereich von 8 bis 14, bevorzugt von 10 bis 13. Ein Vorteil eines solchen basischen pH-Werts ist es, dass die Polysulfidverbindungen in einem höheren Maß deprotoniert vorliegen und daher nukleophiler sind. Dadurch wird die basische Hydrolyse von Neutralverbindungen wie Ester, Aldehyde, Ketone, Organohalogenverbindungen, Amide und Nitrile begünstigt.

Im Zusammenhang mit dem erfindungsgemäßen Verfahren kann jede Art von Polysulfidverbindung eingesetzt werden. Die Polysulfidverbindung ist vorzugsweise ein anorganisches oder ein organisches Polysulfid, insbesondere ein anorganisches Polysulfid. Vorzugsweise ist die mindestens eine Polysulfidverbindung ein Amin-Polysulfid, ein Alkalimetallpolysulfid oder ein Erdalkalimetallpolysulfid. Als besonders gut geeignet erwiesen haben sich Calciumpolysulfid, Natriumpolysulfid und Kaliumpolysulfid, insbesondere Natrium- oder Kaliumpolysulfid. Ein Natrium- oder Kaliumpolysulfid kann beispielsweise durch Auflösen von Schwefel in NaOH- bzw. KOH-Lauge hergestellt werden. Amin-Polysulfide können beispielsweise durch Auflösen von Schwefel in Aminen, zB Ehtanolamin oder Diethanolamin, hergestellt werden.

In einer bevorzugten Ausführungsform beträgt das volumetrische Mischverhältnis zwischen dem synthetischen Rohölstrom und dem Polysulfid-Strom von 10:1 bis 1:5, mehr bevorzugt von 5:1 bis 1:2,5, mehr bevorzugt von 1,5:1 bis 1:1,5. Solche Mischverhältnisse haben sich als besonders gut zur Behandlung des synthetischen Rohölstroms erwiesen.

In einer bevorzugten Ausführungsform weist das aus dem synthetischen Rohölstrom und dem Polysulfid-Strom gebildete Gemisch eine polare Phase und eine apolare Phase auf, wobei die Dien-freien Produkte mehrheitlich in der polaren Phase vorliegen. Vorzugsweise wird das Abscheiden der Dien-freien Produkte aus dem Gemisch dabei durch Abtrennen der polaren Phase erreicht. Wenn es sich bei dem Polysulfid-Strom um eine wässrige Lösung handelt, kann es sich bei der polaren Phase um eine wässrige Phase handeln. Die Dien-freien Produkte können so auf besonders einfache Art und Weise abgetrennt werden.

Als besonders vorteilhaft hat es sich erwiesen, wenn das Inkontaktbringen mit dem Polysulfid-Strom und das nachfolgende Abtrennen der polaren Phase in einem Mixer-Settler durchgeführt wird. Typischerweise umfassen Mixer-Settler eine kontinuierlich betriebene Mischzone und eine kontinuierlich betriebene Absetzzone und erlauben daher die Durchführung des Mischens des synthetischen Rohölstroms mit dem Polysulfid-Strom, sowie des anschließenden Absetzvorgangs zur Trennung der Phasen und Abscheidung des gereinigten synthetischen Rohölstroms in einem kontinuierlichen Prozess.

In einer vorteilhaften Ausführungsform wird die abgetrennte polare Phase zumindest teilweise rückgeführt und zumindest als Teil des Polysulfid-Stroms wiederverwendet. Es hat sich herausgestellt, dass die abgetrennte polare Phase häufig noch einen signifikanten Anteil an unverbrauchten Polysulfidverbindungen enthält. Wenn der Abwasserstrom teilweise im Kreis geführt wird, kann die Polysulfidverbindung daher besser genutzt werden. Beispielsweise kann die Kreisführung von 1 bis 25 Umläufe umfassen. Diese Kreislaufführung kann energetische Vorteile haben und zu geringeren Kosten führen und ermöglicht außerdem eine kleinere Ausführung der Anlage. Der Anteil an verbrauchten Chemikalien kann auch durch eine Zudosierung im Kreislauf durch frisches Medium ausgeglichen werden.

In einer bevorzugten Ausführungsform des erfindungsgemäßen Verfahrens wird der gereinigte synthetischen Rohölstrom mit einer wässrigen Waschlösung gewaschen, um einen zweiten gereinigten synthetischen Rohölstrom zu erhalten. Durch einen solchen zusätzlichen Waschschritt können im synthetischen Rohölstrom enthaltene Verunreinigungen noch gründlicher entfernt werden.

Vorzugsweise handelt es sich bei der wässrigen Waschlösung um eine saure wässrige Waschlösung. Insbesondere ist es bevorzugt, wenn der pH-Wert der wässrigen Waschlösung weniger als 6 beträgt, bevorzugt weniger als 5, mehr bevorzugt weniger als 4, mehr bevorzugt weniger als 3,5. Ein solcher pH-Wert ist insbesondere bevorzugt, wenn der Polysulfid-Strom einen basischen pH-Wert aufweist. So kann auf eine basische Wäsche in Form der Behandlung mit dem Polysulfid-Storm eine saure Wäsche folgen.

Das Waschen des gereinigten synthetischen Rohölstroms mit einer sauren Waschlösung kann die Entfernung basischer Verbindungen wie Amine, Pyridine und anderer basischer Verunreinigungen verbessern. Wenn im Rahmen der Behandlung mit dem Polysulfid-Strom eine basische Hydrolyse von Neutralverbindungen stattgefunden hat, können zusätzlich basische Hydrolyseprodukte, z.B. Amine, entfernt werden. Insbesondere können durch diesen Schritt auch polycyclische Amine effizient entfernt werden können. Polycyclische Amine können in synthetischen Rohölen, insbesondere in Pyrolyseölen, in größerem Ausmaß vorliegen. Sie können sich beispielsweise in Cracking-Prozessen in Anwesenheit einer Stickstoffquelle bilden, beispielsweise Additive oder Polymere wie Polyamid (PA), Polyacrylnitril (PAN) oder Acrylnitril-Butadien-Styrol-Copolymer (ABS). Bei polycyclischen Aminen kann es sich beispielsweise um polykondensierte - gesättigte, einfach und mehrfach ungesättigte oder aromatische Ringsysteme handeln. Sie können teilweise im synthetischen Rohöl gelöst oder im kolloidalen Bereich in Schwebe vorliegen und resultieren häufig in unerwünschten Ablagerungen und damit in einer erschwerten Reinigung der Anlage. Außerdem können sie zu einer Verlegung von aktiven Oberflächen von Katalysatoren bei Folgeanwendungen führen. Zusätzlich können sie unerwünschte Verbindungen wie Salze, Chlorid, Schwermetalle oder Sulfide in der organischen Produktphase lösen. Es hat sich gezeigt, dass durch den sauren Waschschritt polycyclische Amine effizient entfernt werden können. Für die Entfernung von polycyclischen Aminen hat es sich dabei als vorteilhaft erwiesen, wenn der saure Waschschritt bei einer Temperatur von mindestens 20 °C erfolgt. Besonders effizient ist die Entfernung, wenn die Temperatur mindestens 50 °C beträgt.

Allerdings hat es sich im Zuge der Erfindung überraschenderweise als vorteilhaft erwiesen, wenn die Temperatur im sauren Waschschritt nicht zu hoch ist, insbesondere niedriger als die Temperatur des Inkontaktbringens mit dem Polysulfid-Strom. So hat sich gezeigt, dass hohe Temperaturen im sauren Waschschritt zu einer Reduktion der Produktausbeute sowie zur Bildung von Verunreinigungen führen können. Es hat sich daher als vorteilhaft erwiesen, den sauren Waschschritt bei einer Temperatur von weniger als 120 °C durchzuführen. Insbesondere können diese nachteiligen Effekte minimiert werden, wenn die Temperatur weniger als 100 °C, noch mehr bevorzugt weniger als 95 °C, beträgt.

Ein zusätzlicher Vorteil der niedrigeren Temperatur im sauren Waschschritt ist, dass die Anforderungen an das Material der Waschvorrichtung deutlich geringer sind. Das Vorliegen saurer Lösungen bei hohen Temperaturen erfordert häufig die Verwendung spezieller Materialien bzw. Beschichtungen, die zu einer signifikanten Kostenerhöhung führen würden. In einer bevorzugten Ausführungsform erfolgt das Waschen des gereinigten synthetischen Rohölstroms mit der sauren Waschlösung daher bei einer niedrigeren Temperatur als das Inkontaktbringen des synthetischen Rohölstroms mit dem Polysulfid-Strom.

In einer bevorzugten Ausführungsform enthält die wässrige Waschlösung Schwefelsäure. Vorzugsweise beträgt die Konzentration von Schwefelsäure zwischen 0,5 und 10 Gew.-%, insbesondere zwischen 1 und 5 Gew.-%.

Es hat sich zudem als vorteilhaft erwiesen, wenn das volumetrische Mischverhältnis zwischen dem gereinigten synthetischen Rohölstrom und der wässrigen Waschlösung von 10:1 bis 1:5, vorzugsweise von 5:1 bis 1:2,5, noch mehr bevorzugt von 2,5:1 bis 1:1,5 beträgt. Ein solches Mischverhältnis ermöglicht eine besonders effiziente Entfernung von basischen Verunreinigungen.

Das erfindungsgemäße Verfahren kann auch weitere Waschschritte enthalten. Beispielsweise ist es möglich, dass der gereinigte synthetische Rohölstrom weitere Wasch- oder Reinigungsschritte durchläuft, bevor das Waschen mit der wässrigen Waschlösung stattfindet. Bevorzugt ist es jedoch, wenn zwischen dem Abscheiden der Dien-freien Produkte, um den gereinigten synthetischen Rohölstrom zu erhalten und dem Waschen des gereinigten synthetischen Rohölstroms mit der wässrigen Waschlösung kein weiterer Reinigungsschritt erfolgt, insbesondere kein Waschschritt, kein Filtrierungsschritt und/oder kein Hydrotreating-Schritt. Dies hat unter anderem den Vorteil, dass basische Produkte, welche durch die basische Hydrolyse aus Neutralverbindungen entstehen, im unmittelbar auf den basischen Waschschritt folgenden vorzugsweise sauren Waschschritt entfernt werden können.

In einer weiteren bevorzugten Ausführungsform des erfindungsgemäßen Verfahrens wird der zweite gereinigte synthetische Rohölstrom mit einer weiteren wässrigen Waschlösung gewaschen, um einen dritten gereinigten synthetischen Rohölstrom zu erhalten. Das Vorsehen eines solchen weiteren Waschschritts ermöglicht eine besonders gründliche Entfernung von Verunreinigungen, welche nach dem sauren Waschschritt noch vorhanden sein können.

In diesem Zusammenhang ist es besonders bevorzugt, wenn der pH-Wert der weiteren wässrigen Waschlösung im Bereich von 3 bis 13, bevorzugt von 4 bis 12, mehr bevorzugt von 5 bis 11, noch mehr bevorzugt von 6 bis 10, noch mehr bevorzugt von 6,5 bis 9, am meisten bevorzugt von 7 bis 8 liegt. Ein pH-Wert in diesem Bereich ist besonders effektiv für die Entfernung von kleinen polaren neutralen Molekülen sowie von anorganischen und organischen Salzen. Besonders vorteilhaft ist es, wenn die weitere wässrige Waschlösung basisch oder im Wesentlichen neutral, insbesondere im Wesentlichen neutral, ist.

In einer bevorzugten Ausführungsform des erfindungsgemäßen Verfahrens wird der gereinigte synthetische Rohölstrom, der zweite gereinigte synthetische Rohölstrom oder der dritte gereinigte synthetische Rohölstrom einer Hydrierungsanlage zugeführt. Es hat sich herausgestellt, dass die Reduktion des Dien-Gehalts im synthetischen Rohölstrom insbesondere im Zuge einer Hydrierung in einer Hydrierungsanlage besonders vorteilhaft ist, da Diene in solchen Anlagen stabile Komplexe mit Katalysatoren bilden können. Die Verwendung des erfindungsgemäßen Verfahrens in Kombination mit einer Hydrierung kann somit die Lebensdauer der Hydrierungsanlagen und insbesondere der eingesetzten Katalysatoren erheblich verbessern.

Im Zusammenhang mit der Erfindung ist es bevorzugt, wenn das Verfahren zur Reinigung eines synthetischen Rohölstroms ein kontinuierliches Verfahren ist. Gegenüber einem Chargenprozess hat dies den Vorteil, dass eine höhere Produktivität und geringere Stillstandszeiten erreicht werden.

Das Waschen der jeweiligen Rohölströme mit den jeweiligen Waschlösungen wie hierin beschrieben kann das Vermischen des Rohölstroms mit der Waschlösung umfassen, gefolgt vom Abscheiden des gereinigten Rohölstroms von der wässrigen Waschlösung. Vorzugsweise werden die Waschschritte des erfindungsgemäßen Verfahrens in einem mechanischen Mischer, in einem statischen Mischer und/oder in einem Mixer-Settler durchgeführt. Als besonders vorteilhaft hat es sich erwiesen, wenn die Waschschritte jeweils in einem Mixer-Settler durchgeführt werden, wie oben für die Behandlung mit dem Polysulfid-Strom beschrieben.

Im Zusammenhang mit der Erfindung wird unter einem *"*synthetischen Rohölstrom*"* vorzugsweise ein Stoffstrom enthaltend ein synthetisches Rohöl oder eine Fraktion eines synthetischen Rohöls verstanden. Vorzugsweise besteht der synthetische Rohölstrom aus synthetischem Rohöl oder einer Fraktion davon. Im Rahmen der Erfindung ist es besonders bevorzugt, wenn der synthetische Rohölstrom ein Pyrolyseöl oder eine Fraktion davon aufweist, insbesondere daraus besteht. Vorzugsweise ist das Pyrolyseöl ein aus Biomasse, insbesondere Holz, und/oder Kunststoff gewonnenes Pyrolyseöl. Als besonders geeignet hat sich das erfindungsgemäße Verfahren erwiesen, wenn der synthetische Rohölstrom ein aus der Depolymerisation von Biomasse oder Kunststoffmaterial, insbesondere Kunststoffmaterial, gewonnenes Kohlenwasserstoffgemisch ist. Vorzugsweise handelt es sich beim synthetischen Rohölstrom daher um ein Kunststoffpyrolysat oder um eine Fraktion davon, oder um ein Biomasse-, insbesondere Holzpyrolysat, oder um eine Fraktion davon. Das erfindungsgemäße Verfahren ist jedoch ebenfalls gut für andere synthetische Rohöle und Fraktionen davon geeignet. In weiteren bevorzugten Ausführungsformen weist der synthetische Rohölstrom daher Schieferöl oder upgegradetes Bitumen auf, vorzugsweise besteht er daraus.

In einer besonders bevorzugten Ausführungsform wird der synthetischen Rohölstrom daher durch Depolymerisation von Kunststoffmaterial, insbesondere von Kunststoffabfall, erzeugt. Die Fachperson ist mit der Herstellung eines synthetischen Rohölstroms durch Depolymerisation von Kunststoffmaterial vertraut. Solche Verfahren sind beispielsweise aus der WO 2012/149590 A1 und der US 6,060,631 A bekannt.

In einer bevorzugten Ausführungsform weist das Kunststoffmaterial Polyethylen (PE), Polypropylen (PP), Polystyrol (PS), Polyvinylchlorid (PVC), Polyethylenterephthalat (PET), Polyamid (PA), Styrol-Acrylnitril (SAN) und/oder Acrylnitril-Butadien-Styrol (ABS) auf. Das erfindungsgemäße Verfahren hat sich als besonders gut geeignet erwiesen, um Pyrolyseöle aus den genannten Kunststoffmaterialien zu reinigen.

Es ist besonders bevorzugt, wenn das Kunststoffmaterial PVC enthält. Dies führt typischerweise zu Verunreinigungen in Form von Organochlorverbindungen in dem aus dem Kunststoffmaterial gewonnenen Rohölstrom. Organochlorverbindungen können durch die basische Hydrolyse besonders gut entfernt werden, z.B. wenn es sich beim Polysulfid-Strom um eine basische wässrige Lösung handelt.

Ebenfalls bevorzugt ist es, wenn das Kunststoffmaterial PET enthält. Dies führt typischerweise zu Verunreinigungen in Form von Esterverbindungen in dem aus dem Kunststoffmaterial gewonnenen Rohölstrom, welche ebenfalls durch basische Hydrolyse besonders gut entfernt werden können.

Insbesondere ist es bevorzugt, wenn das Kunststoffmaterial PA, SAN, und/oder ABS aufweist. Diese Kunststoffmaterialien führen typischerweise zu Verunreinigungen in Form von Amiden und Nitrilen. Im Zuge des erfindungsgemäßen Verfahrens können diese Verbindungen ebenfalls basisch hydrolysiert werden. Wenn das erfindungsgemäße Verfahren eine saure Wäsche enthält, können die basischen Verbindungen, welche aus der basischen Hydrolyse gebildet werden, insbesondere Amine, außerdem besonders effizient entfernt werden. PA, SAN und ABS können darüber hinaus als Stickstoffquellen dienen und durch Umlagerungsreaktionen, Kondensationsreaktion und/oder radikalischen Reaktionen beispielsweise mit PE, PP und PS zur vermehrten Bildung polycyclischer Amine beitragen. Diese können ebenfalls in einer sauren Wäsche effizient entfernt werden.

Sämtliche hierin genannten Parameter beziehen sich, wenn nicht anders gekennzeichnet, auf SATP-Bedingungen nach IUPAC ("Standard Ambient Temperature and Pressure"), insbesondere auf eine Temperatur von 25 °C und einen Druck von 101.300 Pa.

Sämtliche Prozent-Angaben (%) hierin beziehen sich, wenn nicht anders gekennzeichnet, auf Gewichtsprozent.

Sämtliche hierin angegebenen Mischverhältnisse beziehen sich, wenn nicht anders gekennzeichnet, auf volumetrische Mischverhältnisse, d.h. auf Volumenverhältnisse (Volumen:Volumen).

Die vorliegende Erfindung wird durch die folgende Figur illustriert, auf welche sie selbstverständlich nicht eingeschränkt ist.

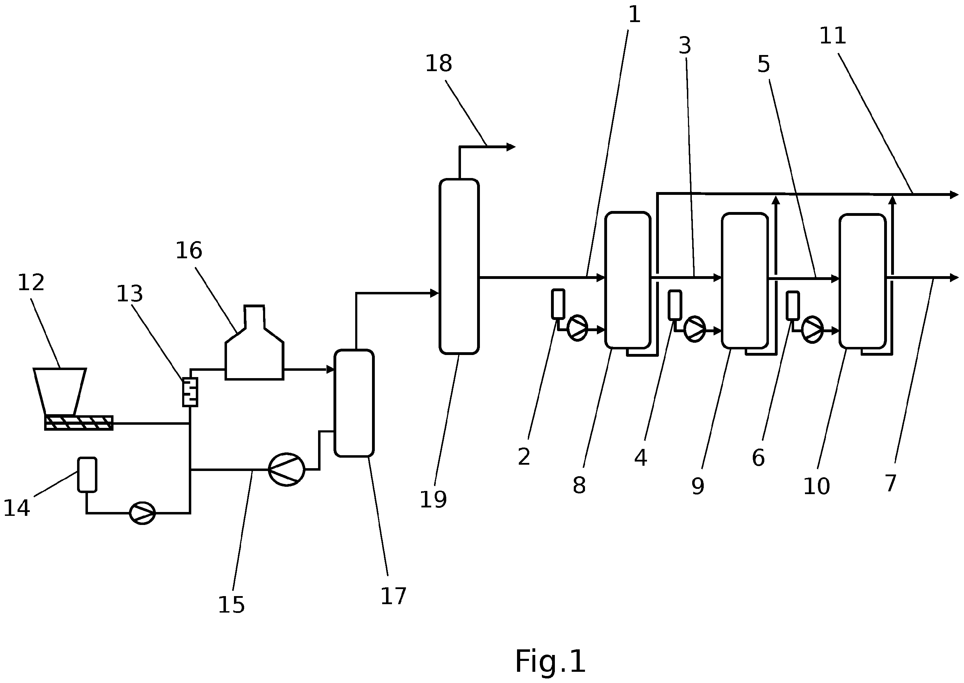

Figur 1 zeigt ein Verfahrensfließschema einer bevorzugten Ausführungsform des erfindungsgemäßen Verfahrens.

In der in Figur 1 gezeigten Ausführungsform wird der synthetische Rohölstrom 1 durch Depolymerisation von Kunststoffmaterial gewonnen. Das Kunststoffmaterial wird einem Extruder 12 kompaktiert, entgast und geschmolzen. Die aus dem Extruder 12 austretende Kunststoffschmelze wird in einem statischen Mischer 13 mit einem externen Lösungsmittel 14, vorzugsweise Schweröl, und/oder mit bereits gecrackten Kunststoffmaterial, welches als Recyclingstrom 15 rückgeführt wird, vermischt, um die Viskosität der Kunststoffschmelze zu reduzieren. Das resultierende Gemisch wird in einen Depolymerisationsreaktor 16 eingebracht, in welchem das Kunststoffmaterial depolymerisiert wird, vorzugsweise bei einer Temperatur zwischen 400 °C und 440 °C. Gecracktes Kunststoffmaterial wird als Kopfprodukt einer Kolonne 17 gewonnen. Nach Abtrennung eines Gasstroms 18 in einer weiteren Kolonne 19 wird der synthetische Rohölstrom 1 gewonnen, wobei der synthetische Rohölstrom 1 eine Dien-Zahl von mindestens 0,1 g/100g aufweist.

In der gezeigten Ausführungsform wird der synthetische Rohölstrom 1 mit einem Polysulfid-Strom 2 in einer Mischzone eines ersten Mixer-Settlers 8 vermischt, vorzugsweise in einem volumetrischen Mischverhältnis von 1:1. Beim Polysulfid-Strom 2 handelt es sich vorzugsweise um eine basische wässrige Lösung enthaltend Natrium- oder Kaliumpolysulfid. Das Gemisch aus dem synthetischen Rohölstrom 1 und dem Polysulfid-Strom 2 hat vorzugsweise eine Temperatur von mindestens 80 °C. Die im synthetischen Rohölstrom 1 enthaltenen Dienverbindungen reagieren zumindest teilweise mit den Polysulfiden und bilden unlösliche Dien-freie Produkte. In der Folge wird die Ölphase von der Wasserphase in einer Absetzzone des Mixer-Settlers 8 getrennt. Die Dien-freien Produkte werden dabei mit der Wasserphase abgeschieden. Die durchschnittliche Verweilzeit im ersten Mixer-Settler 8 beträgt vorzugsweise zwischen 5 und 30 Minuten. Die Wasserphase wird als Teil des Abwasserstroms 11 entfernt und die Ölphase wird als gereinigter synthetischer Rohölstrom 3 abgetrennt.

Der so erhaltene gereinigte synthetische Rohölstrom 3 wird daraufhin in einem zweiten Mixer-Settler 9 mit einer wässrigen Waschlösung 4 vermischt. Bei der wässrigen Waschlösung 4 handelt es sich vorzugsweise um wässrige Schwefelsäure mit einem pH-Wert zwischen 0 und 5. In der Folge wird wiederum die gereinigte Ölphase von der Wasserphase in einer Absetzzone des Mixer-Settlers 9 getrennt, die Wasserphase wird über den Abwasserstrom 11 entfernt, und aus der Ölphase wird ein zweiter gereinigter synthetischer Rohölstrom 5 erhalten. Der zweite gereinigte synthetische Rohölstrom 5 wird in der gezeigten Ausführungsform in einem dritten Mixer-Settler 10 mit einer weiteren wässrigen Waschlösung 6 gewaschen. Bei der weiteren wässrigen Waschlösung 6 handelt es sich vorzugsweise um eine neutrale Waschlösung, vorzugsweise im Wesentlichen um Wasser. Nach dem Waschen wird die Wasserphase wiederum als Teil des Abwasserstroms 11 entfernt und aus der Ölphase wird der dritte gereinigte synthetische Rohölstrom 7 erhalten.

## Patentansprüche

1. Verfahren zur Reinigung eines synthetischen Rohölstroms (1), das Verfahren umfassend die folgenden Schritte:
- Bereitstellen des synthetischen Rohölstroms (1), wobei der synthetische Rohölstrom (1) Dienverbindungen enthält und eine Dien-Zahl von mindestens 0,1 g/100g aufweist;
- Inkontaktbringen des synthetischen Rohölstroms (1) mit einem Polysulfid-Strom (2) enthaltend mindestens eine Polysulfidverbindung, um ein Gemisch zu bilden, wodurch zumindest ein Teil der Dienverbindungen in Dien-freie Produkte umgesetzt wird; und
- Abscheiden der Dien-freien Produkte aus dem Gemisch, um einen gereinigten synthetischen Rohölstrom (3) zu erhalten.

2. Das Verfahren gemäß Anspruch 1, wobei das Inkontaktbringen des synthetischen Rohölstroms (1) mit dem Polysulfid-Strom (2) bei einer Temperatur von mindestens 80 °C erfolgt.

3. Das Verfahren gemäß Anspruch 1 oder 2, wobei der Polysulfid-Strom (2) eine wässrige Lösung ist.

4. Das Verfahren gemäß einem der Ansprüche 1 bis 3, wobei die Konzentration der Polysulfidverbindungen im Polysulfid-Strom (2) mindestens 1 Gew.-% beträgt.

5. Das Verfahren gemäß einem der Ansprüche 1 bis 4, wobei der Polysulfid-Strom (2) einen pH-Wert von mehr als 8 aufweist.

6. Das Verfahren gemäß einem der Ansprüche 1 bis 5, wobei die mindestens eine Polysulfidverbindung ein Amin-Polysulfid, ein Alkalimetallpolysulfid oder ein Erdalkalimetallpolysulfid ist.

7. Das Verfahren gemäß einem der Ansprüche 1 bis 6, wobei die mindestens eine Polysulfidverbindung Natrium- oder Kaliumpolysulfid ist.

8. Das Verfahren gemäß einem der Ansprüche 1 bis 7, wobei das volumetrische Mischverhältnis zwischen dem synthetischen Rohölstrom (1) und dem Polysulfid-Strom (2) von 10:1 bis 1:5 beträgt.

9. Das Verfahren gemäß einem der Ansprüche 1 bis 8, wobei das aus dem synthetischen Rohölstrom (1) und dem Polysulfid-Strom (2) gebildete Gemisch eine polare Phase und eine apolare Phase aufweist, wobei die Dien-freien Produkte mehrheitlich in der polaren Phase vorliegen und wobei das Abscheiden der Dien-freien Produkte aus dem Gemisch durch Abtrennen der polaren Phase erreicht wird.

10. Das Verfahren gemäß einem der Ansprüche 1 bis 9, wobei der gereinigte synthetische Rohölstrom (3) mit einer wässrigen Waschlösung (4) gewaschen wird, um einen zweiten gereinigten synthetischen Rohölstrom (5) zu erhalten.

11. Das Verfahren gemäß Anspruch 10, wobei der pH-Wert der wässrigen Waschlösung (4) weniger als 6 beträgt.

12. Das Verfahren gemäß Anspruch 10 oder 11, wobei der zweite gereinigte synthetische Rohölstrom (5) mit einer weiteren wässrigen Waschlösung (6) gewaschen wird, um einen dritten gereinigten synthetischen Rohölstrom (7) zu erhalten.

13. Das Verfahren gemäß einem der Ansprüche 1 bis 12, wobei der gereinigte synthetische Rohölstrom (3), der zweite gereinigte synthetische Rohölstrom (5) oder der dritte gereinigte synthetische Rohölstrom (7) einer Hydrierungsanlage zugeführt wird.

14. Das Verfahren gemäß einem der Ansprüche 1 bis 13, wobei der synthetische Rohölstrom (1) durch Depolymerisation von Kunststoffmaterial, insbesondere von Kunststoffabfall, erzeugt wird.

15. Das Verfahren gemäß Anspruch 14, wobei das Kunststoffmaterial Polyethylen (PE), Polypropylen (PP), Polystyrol (PS), Polyvinylchlorid (PVC), Polyethylenterephthalat (PET), Polyamid (PA), Styrol-Acrylnitril (SAN) und/oder Acrylnitril-Butadien-Styrol (ABS) aufweist.
